# EUROPÄISCHE PATENTSCHRIFT

(11) **EP 2 487 839 B1**
(45) Veröffentlichungstag und Bekanntmachung des Hinweises auf die Patenterteilung: **21.10.2015**
(21) Anmeldenummer: 12155166.7
(22) Anmeldetag: 13.02.2012
(51) Int. Cl.: H04L 12/28, B60L 11/18, H04L 12/40

(54) **Lade- und Kommunikationssystem für Kraftfahrzeug**
Charging and communication system for a motor vehicle
Système de chargement et de communication pour un véhicule automobile

(30) Priorität: 11.02.2011 EP 11154243
(43) Veröffentlichungstag der Anmeldung: 15.08.2012
(73) Patentinhaber: Teleconnect GmbH, 01157 Dresden (DE)
(72) Erfinder: Bluschke, Andreas, 01217 Dresden (DE); Matthews, Michael, 01157 Dresden (DE); Rietzsch, Philipp, 01157 Dresden (DE)
(74) Vertreter: Caspary, Karsten

(56) Entgegenhaltungen:
- WO-A2-2010/100081
- FR-A1- 2 948 843
- JP-A- 11 027 807
- JP-A- 2009 100 608

## Beschreibung

Die vorliegende Erfindung betrifft ein Lade- und Kommunikationssystem für ein Kraftfahrzeug, insbesondere für ein Hybrid- oder Elektrokraftfahrzeug.

### Stand der Technik

Für Hausnetzanwendungen werden heute verschiedenste Datenkommunikationstechnologien eingesetzt. Es zeichnet sich ab, dass sich zukünftig für die auf elektrischen Leitungen basierende Datenübertragung, z. B. über eine Zweidrahtleitung aus Kupfer oder anderem Material, Verfahren durchsetzen werden, die durch Normungsgremien oder Industrievereinigungen, wie IEEE (P1901), die Homeplug Alliance (HP AV, HP AV2, HP Green PHY) und die ITU (z. B. G.hn (G.9960) und G.hnem, HPNA (G.9954)) definiert wurden. Alle diese Verfahren sollen in ihrer Gesamtheit hier als HP/G.hn bezeichnet werden. Diese Übertragungsverfahren basieren auf OFDM/DMT (Orthogonal Frequency Division Multiplexing / Discrete Multitone) bzw. deren Modifikationen, wobei die Trägeranzahl und deren Abstand bei unterschiedlichen Bandbreiten und Übertragungsmedien variiert werden.

Anwendungen beschränken sich nicht nur auf Hausnetze, d. h. der Begriff Hausnetz ist hier als Verallgemeinerung für alle möglichen Anwendungsfälle der jeweiligen Technologien in Gebäuden, Büros, Einfamilienhäusern, Industrieanlagen usw. zu betrachten. Hierbei handelt es sich ausschließlich um Verfahren, die für elektrische Übertragungsmedien, d. h. Stromleitung (Powerline), Telefonkabel, Koaxialkabel, Datenkabel wie z. B. Twisted-Pair-Kabel usw. entwickelt wurden.

Die Entwicklung von Elektrofahrzeugen hat in letzter Zeit stark zugenommen. Dabei werden u. a. unterschiedliche Konzepte für die Aufladung der Batterien in Elektrofahrzeugen diskutiert. Gleichgültig, über welche Ladestationen und mit welcher Ladespannung (Wechselspannung z. B. mit 110 V, 220 - 240 V oder 380 V für langsames Laden oder Gleichspannung für Schnellladen) die Aufladung realisiert wird, alle Ansätze haben gemeinsam, dass ein elektrisches Ladekabel zur Verbindung zwischen Ladestation und Elektrofahrzeug verwendet wird.

Es ist ebenso bekannt, dass über dasselbe elektrische Ladekabel auch die Kommunikation zwischen Ladestation und Elektrofahrzeug erfolgt, wobei dafür verschiedene Datenkommunikationsverfahren verwendet werden können. Zur Diskussion stehen dabei die oben genannten Verfahren, die auch für Hausnetzanwendungen definiert wurden. Wenn Elektrofahrzeuge mittels Ladekabel an eine Ladestation angeschlossen werden, werden über den Kommunikationskanal nicht nur Daten über den Ladezustand der Batterie und Authentifizierungsdaten ausgetauscht, sondern es bietet sich an, auch Infotainmentdaten zwischen Hausnetz und den Infotainmentgeräten (z. B. Musik- oder Videodownloads, Aktualisierung der Daten des Navigationssystems und dergleichen) oder Serviceinformationen (z. B. festgestellte Defekte, Fehlerspeicher usw.) zu übertragen. Auch der Zustand des Fahrzeugs (Ladezustand, Servicetermin, Standheizung/-kühlung oder ähnliches) kann "im Wohnzimmer" abgefragt und entsprechend beeinflusst werden.

In Fahrzeugen kommen heute die unterschiedlichsten Bussysteme bei der Datenübertragung zur Anwendung. Für die Übertragung von Infotainmentdaten (Multimediadaten mit zugehöriger Kontroll- und Steuerinformationen) oder auch in Fahrerassistenzsystemen wird das sogenannte MOST (Media Oriented Systems Transport) Bussystem genutzt. MOST ist ein optisches Bussystem, welches Lichtwellenleiter wie z. B. polymerbasierende optische Fasern (POF) nutzt. Der Einsatz der POF in Fahrzeugen ab der oberen Mittelklasse ist heutzutage Stand der Technik (2010 hat das MOST-Forum verkündet, dass es bereits über 100 mit MOST ausgestattete Fahrzeuge gibt).

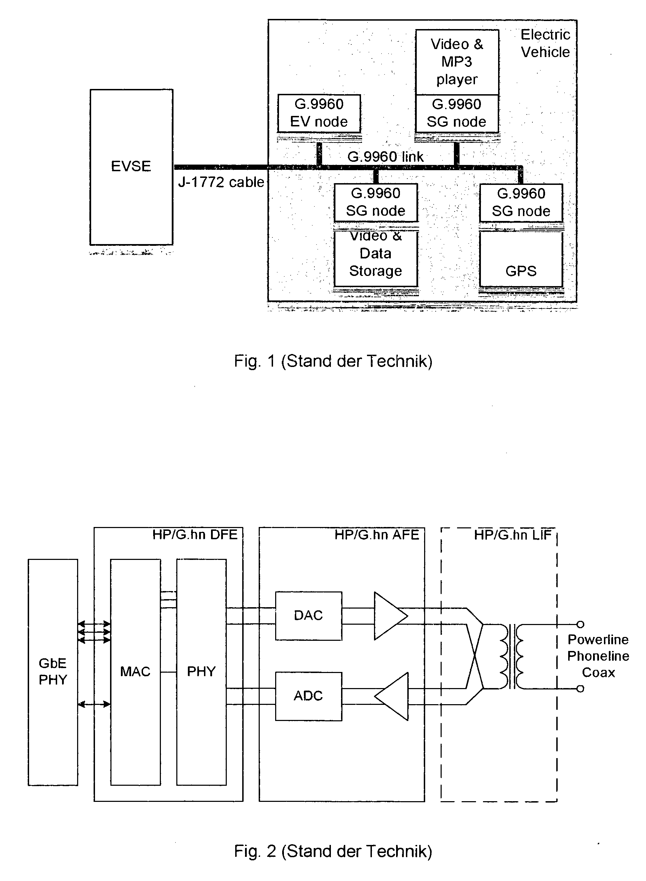

Daneben ist es grundsätzlich auch möglich, die durch HP/G.hn beschriebenen Verfahren für die Datenkommunikation innerhalb von Fahrzeugen auf Kupferdrahtleitungen zu verwenden. In der ITU-T-Empfehlung G.9960 (06/2010) wird in der Figur VI-4/G.9960 ein Beispiel für die Verwendung von G.hn in einem Elektrofahrzeug gezeigt. Fig. 1 zeigt dieses Beispiel, bei dem die Infotainmentdaten in einem Elektrofahrzeug mittels der G.hn-Technologie übertragen werden können. G.hn wird in der Empfehlung G.9960 ausschließlich als auf elektrischen Leitungen basierendes bzw. kupferbasierendes Übertragungsverfahren beschrieben.

Der typische Aufbau eines bekannten elektrischen HP/G.hn-Transceivers, d. h. Schnittstellenelements, für die Gigabit Ethernet- (GbE-) Übertragung ist in Fig. 2 gezeigt.

Ein elektrischer HP/G.hn-Transceiver besteht aus den folgenden Hardwarekomponenten: GbE PHY - GbE PHYsical-Layer Schnittstellenbaustein (MAC - Media Access Controller); DFE - Digital Frontend; AFE - Analog Frontend (DAC - Digital-Analog-Converter; ADC - Analog-Digital-Converter) und LIF - elektrisches Line Interface (auch 4 Draht/2 Draht-Umsetzer bzw. Hybrid genannt). Die Software, die im DFE und AFE läuft, hängt vom konkreten kupferbasierenden Übertragungsmedium ab. Bei den erwähnten Hardwarekomponenten handelt es sich jeweils (mit Ausnahme des LIF) um hochkomplexe System-on-a-Chip-Komponenten.

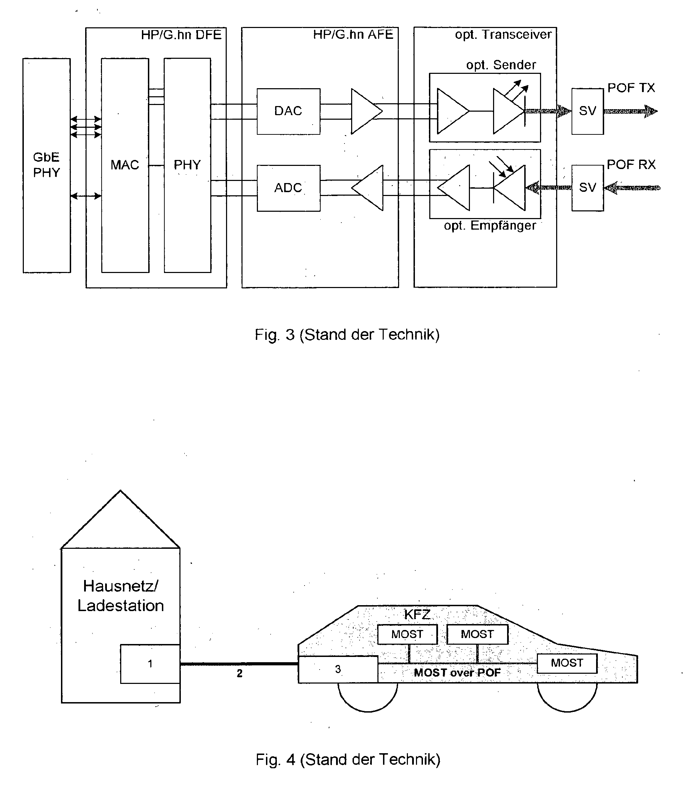

Ein bekannter optischer HP/G.hn-Transceiver ist schematisch in Fig. 3 dargestellt.

Ein Großteil der Hardwarekomponenten des optischen HP/G.hn-Transceivers aus Fig. 3 ist identisch mit denen des in Fig. 2 dargestellten elektrischen HP/G.hn-Transceivers. Anstelle eines LIFs kommt jedoch ein optischer Transceiver, bestehend aus analogem optischen Sender und analogem optischen Empfänger zum Einsatz. Die Software des DFE und AFE kann mit der eines elektrischen HP/G.hn-Transceivers identisch sein, muss aber nicht, d. h. sie kann auf die Besonderheiten des optischen Übertragungsmediums angepasst bzw. optimiert sein (z. B. Trägeranzahl, Trägerabstand, Cyclic Prefix usw.). Die Anbindung an das optische Übertragungsmedium (hier: eine POF pro Übertragungsrichtung) erfolgt in diesem Beispiel über Steckverbinder (SV), kann aber auch ohne diese ausgeführt sein (sog. connectorless).

Die Anwendung eines solchen HP/G.hn Transceivers 1 in einer KFZ-Ladestation ist in Fig. 4 dargestellt. Dort ist ein Fahrzeug (KFZ) mittels HP/G.hn über ein elektrisches Ladekabel 2 an ein Hausnetz bzw. eine Ladestation angeschlossen. Im Hausnetz sorgt ein elektrischer HP/G.hn Transceiver 1 für die Schnittstellenverbindung zum elektrischen Datennetz im Haus. Im KFZ ist dementsprechend ein Umsetzer 3 von HP/G.hn auf MOST (auch Gateway genannt) erforderlich. Dieser Umsetzer 3 enthält einen Großteil der Komponenten, die der oben beschriebene elektrische HP/G.hn-Transceiver 1 aufweist (DFE, AFE und LIF) und alle Komponenten, die für die Realisierung einer MOST-Schnittstelle erforderlich sind (z. B. MOST Network Interface Controller), und ist daher relativ kompliziert aufgebaut. Im KFZ erfolgt die Übertragung beispielsweise über POF. Im Hausnetz/Ladestation wird die kupferbasierende Kabelinfrastruktur genutzt und das Ladekabel 2 nutzt die elektrischen Leitungen im Ladekabel zur Realisierung eines Kommunikationskanals.

### Nachteile des Standes der Technik

Wenn die Datenübertragung zwischen Hausnetz via Ladestation und Ladekabel mit einem HP/G.hn-Verfahren erfolgt, ist im Elektrofahrzeug ein zusätzlicher Umsetzer von HP/G.hn (elektrisch) auf MOST (optisch) erforderlich. Dieser zusätzliche Umsetzer erfordert Realisierungsaufwand für die Protokollumsetzung und erzeugt Kosten. Außerdem erhöht er die Komplexität des Infotainmentsystems und wirkt sich negativ auf deren Fehleranfälligkeit aus.

Wenn jedoch für die Kommunikation im Elektrofahrzeug HP/G.hn über elektrische Leitungen verwendet würde, dann würde dies dazu führen, dass alle die Vorteile, die die POF in Fahrzeugen bietet (siehe http-//www.dspof.com/en/support-pgdetail-88.html) und weshalb sie weite Verbreitung in Fahrzeugen gefunden hat, nicht genutzt werden können.

### Aufgabe der Erfindung

Es ist daher die Aufgabe der vorliegenden Erfindung, ein Lade- und Kommunikationssystem für eine Kraftfahrzeug bereitzustellen, das die oben genannten Nachteile im Stand der Technik überwindet, relativ einfach aufgebaut ist, die Kosten und die Komplexität des Gesamtsystems reduziert und zusätzliche Komponenten nicht erforderlich macht. Gleichzeitig sollen hohe Datenübertragungsraten zwischen Hausnetz und Kraftfahrzeug und weiterhin die Verwendung von optischen Übertragungsmedien im Kraftfahrzeug ermöglicht werden.

Diese Aufgabe wird durch den Gegenstand mit den Merkmalen des Anspruchs 1 gelöst. Vorteilhafte Ausführungsformen sind in den abhängigen Ansprüchen beschrieben.

Damit ist eine homogene Datenkommunikation zwischen Ladestation bzw. Hausnetz und dem Kraftfahrzeug gewährleistet, die ohne komplexe Hardware und Software zur Umsetzung der Übertragungsverfahren auskommt. Dies führt zu einer erheblichen Aufwands- und damit Kostenreduzierung. Auch die Fehleranfälligkeit und der Pflegeaufwand werden dadurch reduziert. Mit dem erfindungsgemäßen einheitlichen bzw. durchgängigen Übertragungsverfahren in allen Bestandteilen des Lade- und Kommunikationssystems wird erreicht, dass die sich als sehr vorteilhaft für den Einsatz in Fahrzeugen erwiesene POF-Infrastruktur weiterhin beibehalten werden kann. Damit können die Vorteile des Einsatzes der POF uneingeschränkt genutzt werden und auch höhere Bitraten angeboten werden. Durch die einheitlichen Schnittstellen sind keine "Protokollumsetzer", d. h. zusätzliche Hardware- oder Softwarekomponenten im Kraftfahrzeug erforderlich. Dadurch ergibt sich eine Kosten-, Leistung- und Gewichtseinsparung.

Es wird eine Vereinheitlichung bzw. Harmonisierung des Datenübertragungsverfahrens zwischen Hausnetz und Kraftfahrzeug vorgeschlagen, d. h. das im Hausnetz verwendete Übertragungsverfahren wird einerseits für die Datenübertragung über das Ladekabel und andererseits zusätzlich auch für die Datenübertragung im Kraftfahrzeug verwendet. Dabei ist es unerheblich, ob das Hausnetz, die Ladestrecke und das Datennetz im Kraftfahrzeug als elektrisches Medium, z. B. über Ethernetverkabelung, oder als optisches Medium ausgebildet sind. Für die Datenübertragung im Kraftfahrzeug können deshalb die bewährten Vorzüge der POF (Lichtwellenleiter) weiter genutzt werden.

Die Erfindung wird nachfolgend ausführlich unter Bezugnahme auf in den Zeichnungen dargestellte Ausführungsbeispiele erläutert. Es zeigen:
- Fig. 1: eine schematische Darstellung der bekannten Verwendung des Übertragungsstandards G.hn in einem Elektrofahrzeug,
- Fig. 2: eine schematische Darstellung des Aufbaus eines bekannten elektrischen HP/G.hn-Transceivers,
- Fig. 3: eine schematische Darstellung des Aufbaus eines bekannten optischen HP/G.hn-Transceivers,
- Fig. 4: eine schematische Darstellung des optischen HP/G.hn-Transceivers aus Fig. 3 in einer bekannten KFZ-Ladestation,
- Fig. 5: eine schematische Darstellung einer bevorzugten Ausführungsform des erfindungsgemäßen Lade- und Kommunikationssystems,
- Fig. 6: eine schematische Darstellung einer weiteren Ausführungsform des erfindungsgemäßen Lade- und Kommunikationssystems,
- Fig. 7: eine schematische Darstellung einer weiteren Ausführungsform des erfindungsgemäßen Lade- und Kommunikationssystems,
- Fig. 8: eine schematische Darstellung einer weiteren Ausführungsform des erfindungsgemäßen Lade- und Kommunikationssystems, und
- Fig. 9: eine schematische Darstellung einer weiteren Ausführungsform des erfindungsgemäßen Lade- und Kommunikationssystems.

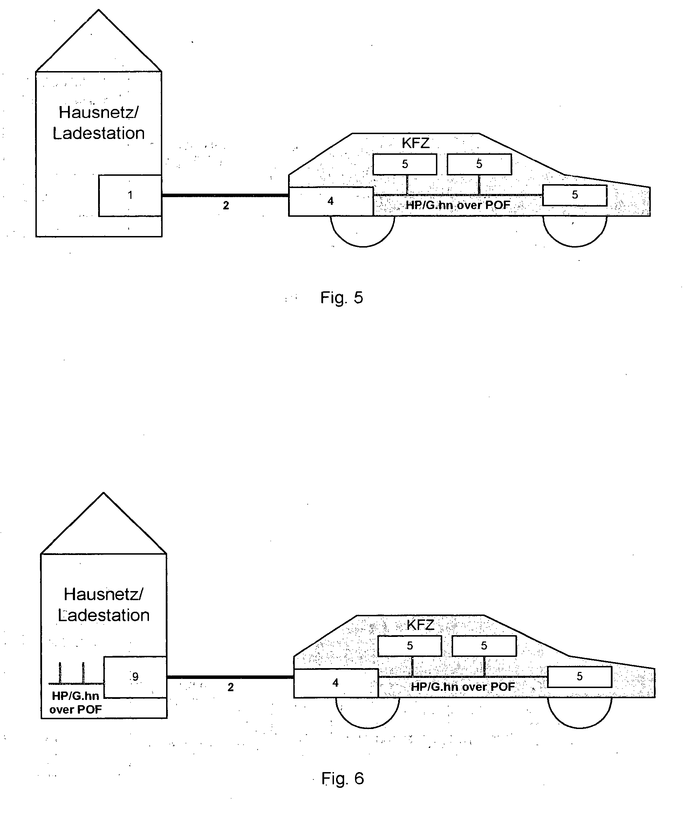

Im Folgenden sollen einige Ausführungsbeispiele der vorliegenden Erfindung anhand der schematischen Figuren 5 bis 9 ausführlich erläutert werden.

In Fig. 5 ist gezeigt, wie sich die vorliegende Erfindung vom Stand der Technik absetzt, denn der Umsetzer 3 HP/G.hn-MOST aus Fig. 4 im KFZ ist dort nicht mehr erforderlich, weil im KFZ ein mit dem im Hausnetz/Ladestation verwendeten Übertragungsverfahren identisches Übertragungsverfahren zur Anwendung kommt. Im KFZ erfolgt die Übertragung über POF. Im Hausnetz/Ladestation wird die kupferbasierende Kabelinfrastruktur genutzt und das Ladekabel 2 (Verbindung zwischen Hausnetz/Ladestation und KFZ) nutzt die Kupferleitungen im Ladekabel zur Realisierung eines Kommunikationskanals. Das erste Schnittstellenelement ist ein elektrischer HP/G.hn Transceiver 1, wie er oben bereits beschrieben wurde.

Das zweite Schnittstellenelement 4 im KFZ ist ein Medienkonverter, der eine "Rücken-an-Rücken"-Schaltung eines elektrischen und eines optischen HP/G.hn-Transceivers darstellt, wobei die GbE-PHYs bzw. auch ein Großteil der MAC-Funktionalität entfallen können.

Durch diese Art von Schaltung im Schnittstellenelement 4 wird das elektrische Signal aus dem Ladekabel 2 in ein optisches Signal zur Weiterverarbeitung im POF-Datenübertragungsnetz des KFZ umgewandelt. In analoger Weise wirkt der Medienkonverter auch in entgegen gesetzter Richtung, d. h. bei der Umwandlung des optischen Signals aus dem KFZ in ein elektrisches Signal für das Ladekabel 2.

Unter Bezugnahme auf die ITU-T-Empfehlung G.9960 (Ausgabe 06/2010) kann ein Medienkonverter auch als Inter-Domain-Bridge (IDB) verstanden werden (siehe Figure 5-5/G.9960 und § 5.1.6 der ITU-T-Empfehlung G.9960), wenn man den elektrischen, kupferbasierenden Teil als eine erste Domain und das optische POF-Netz im KFZ als eine zweite Domain betrachtet. Eine IDB besteht dabei aus zwei HP/G.hn DFEs, zwei HP/G.hn AFEs (oder einem zweifach HP/G.hn AFE), einem HP/G.hn LIF und einem optischen Transceiver. Somit wird gewährleistet, dass die Daten aus der ersten Domain in die zweite Domain und die Daten aus der zweiten Domain in die erste Domain übermittelt werden.

Die Verkabelung zwischen den HP/G.hn-Knoten 5 im KFZ ist in allen Figuren jeweils symbolisch angedeutet, d. h. es kann sich dabei um eine beliebige Verkabelungsstruktur handeln, beispielsweise eine Ring-, Stern-, Doppelring-, Bus-, Daisy Chain-, Punkt-zu-Punkt-oder Punkt-zu-Mehrpunkt-Struktur.

In Erweiterung des Ausführungsbeispiels von Fig. 5 ist in Fig. 6 in einer weiteren Ausführungsform der Erfindung dargestellt, dass das Hausnetz/Ladestation nicht unbedingt nur eine elektrische, kupferbasierende Infrastruktur haben muss, sondern dass auch dort die POF ergänzend als Übertragungsmedium genutzt werden kann. Für die Nutzung der POF muss das erste Schnittstellenelement 9 zusätzlich einen optischen Transceiver aufweisen, der für die Umwandlung des elektrischen Signals (Ladekabel 2 und elektrisches Hausnetz) in ein optisches Signal für die POF-Infrastruktur sorgt. Dieser Medienkonverter 9 entspricht in seiner Funktion und seinem Aufbau dem Medienkonverter, den das zweite Schnittstellenelement 4 aufweist. Auch hier ist die Verkabelungsstruktur im Hausnetz lediglich symbolisch angedeutet, d. h. es kann sich dabei um eine beliebige Verkabelungsstruktur handeln, beispielsweise eine Ring-, Stern-, Doppelring , Bus-, Daisy Chain-, Punkt-zu-Punkt- oder Punkt-zu-Mehrpunkt-Struktur.

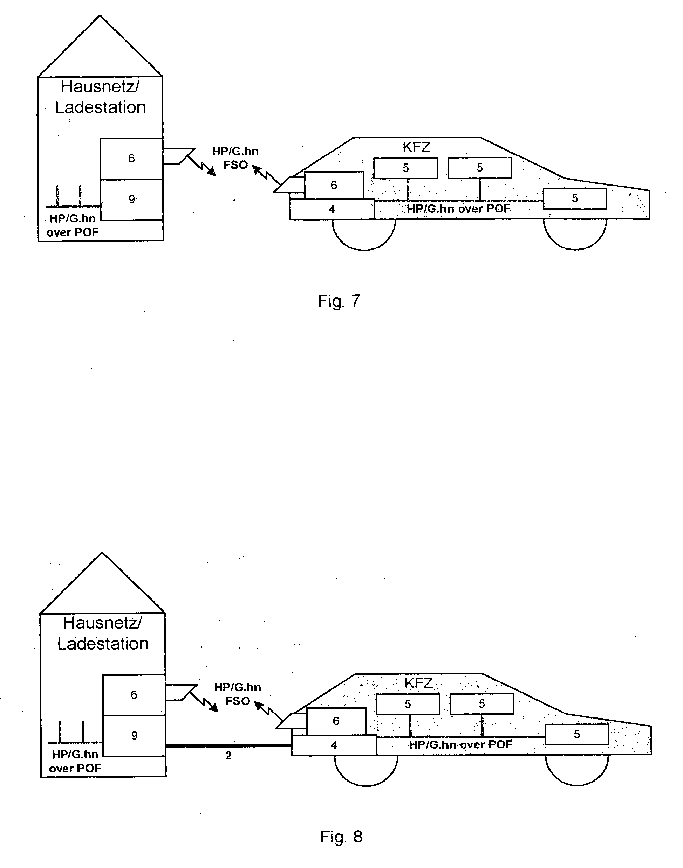

Es sind auch Ausführungsformen möglich, bei denen eine optische Übertragung mittels HP/G.hn-Übertragungsverfahren zwischen Hausnetz/Ladestation und KFZ bzw. innerhalb des Hausnetzes erfolgen kann (FSO - Free Space Optics; VLC - Visible Light Communication; OWC - Optical Wireless Communications) (siehe Fig. 7). In diesem Fall wird der Kommunikationskanal nicht über das Ladekabel realisiert, sondern über eine optische Freiraumverbindung. Die optischen Transceiver für die FSO bzw. VLC bzw. OWC unterscheiden sich von denen für die POF (siehe oben) dadurch, dass es keine Stecker zum Anschluss an die POF gibt. Anstelle der Stecker kommen Sende- und Empfangsoptiken bestehend aus Linsen zur Anwendung (siehe z. B. http://www.freespaceoptics.org). Damit kann die Kommunikation ermöglicht werden, ohne dass das Ladekabel angesteckt ist.

Der prinzipielle Aufbau einen VLC-Systems ist in A. Paraskevopoulos, J. Vucic, C. Kottke, L. Fernändez, K. Habel, K.-D. Langer. Optical wireless network built on white-light LEDs reaches 800Mb/s. http://spie.orq/x84327.xml?ArticleID=x84327 beschrieben.

In den beiden Schnittstellenelementen kommen in diesem Fall zusätzliche Transceiver 6 zum Einsatz, die das elektrische oder optische Signal aus dem Hausnetz in ein für die optische Freiraumverbindung geeignetes optisches Signal umwandeln, denn für die POF wird üblicherweise eine andere optische Wellenlänge bzw. Frequenz verwendet als bei der Freiraumverbindung. In analoger Weise wandelt im zweiten Schnittstellenelement des KFZ ein zusätzlicher Transceiver 6 das optische Signal der Freiraumverbindung für die Weiterverarbeitung um.

Eine Erweiterung des Ausführungsbeispiels von Fig. 7 ist in der Fig. 8 aufgezeigt. Parallel zur optischen Freiraumanbindung wird ein HP/G.hn-basierender elektrischer Kommunikationskanal zwischen Hausnetz/Ladestation und KFZ realisiert. Damit kann einerseits die Sicherheit der Verbindung zwischen Hausnetz/Ladestation und KFZ und andererseits die Bitrate erhöht werden (Kanalbündelung bzw. Multiple Input Multiple Output, MIMO).

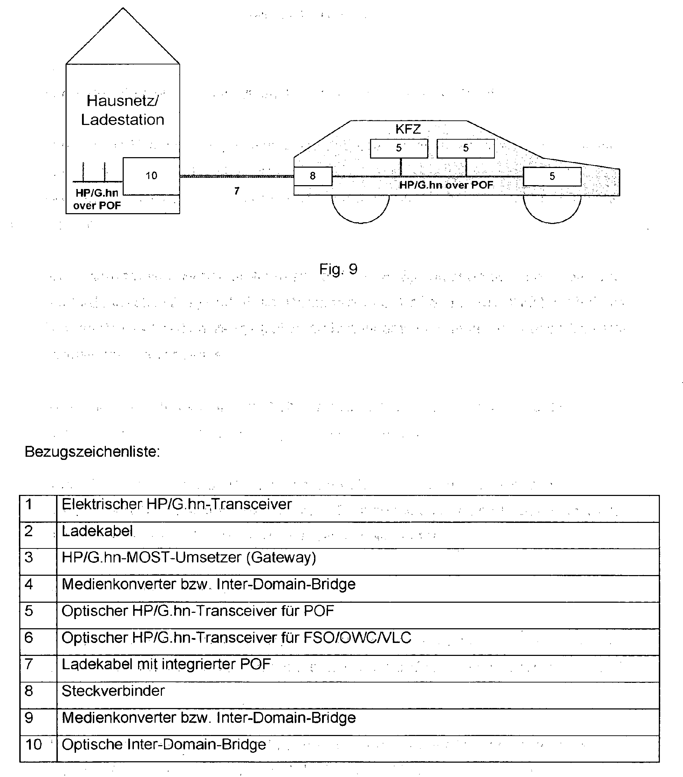

Zukünftig können für Anwendungen mit hoher Bitrate eine oder mehrere POF in ein Ladekabel integriert werden. Damit ist ein störfester Kommunikationskanal mit sehr hoher Übertragungskapazität zwischen Hausnetz und Fahrzeug realisierbar. Dieses Ausführungsbeispiel mit zusätzlicher optischer Ladestrecke 7 ist in Fig. 9 dargestellt. Das erste Schnittstellenelement umfasst hier eine optische Inter-Domain-Bridge 10 oder einen Steckverbinder (ähnlich 8). Das zweite Schnittstellenelement weist hier einen reinen optischen Steckverbinder 8 auf.

Mit der vorliegenden Erfindung wurde ein Lade- und Kommunikationssystem für ein Kraftfahrzeug bereitgestellt, das relativ einfach aufgebaut ist, die Kosten und die Komplexität reduziert und auf zusätzliche komplexe Komponenten unter Weiterverwendung der vorteilhaften POF im KFZ verzichtet.

## Patentansprüche

1. Lade- und Kommunikationssystem für ein Kraftfahrzeug (KFZ) mit
einer an ein Hausnetz angeschlossenen Ladestation, die über ein erstes Schnittstellenelement (1, 6, 9, 10) mit einem Ende einer Ladestrecke (2, 7) verbunden ist, wobei das Hausnetz zur Datenkommunikation ein erstes Übertragungsverfahren verwendet,
und einem zweiten Schnittstellenelement (3, 4, 6, 8) zwischen dem anderen Ende der Ladestrecke (2, 7) und einem Datennetz des Kraftfahrzeugs (KFZ), wobei das Datennetz des Kraftfahrzeugs (KFZ) zur Datenkommunikation ein zweites Übertragungsverfahren verwendet,
wobei die Ladestrecke ein Ladekabetmit einer elektrischen Leitung (2) zum Aufladen eines Energiespeichers des Kraftfahrzeugs umfasst,
wobei über das erste Schnittstellenelement (1, 6, 9, 10), die Ladestrecke (2, 7) und das zweite Schnittstellenelement (3, 4, 6, 8) mindestens ein Übertragungskanal zur Datenkommunikation in beiden Richtungen ausgebildet ist, wobei das erste Übertragungsverfahren mit dem zweiten Übertragungsverfahren identisch ist
**dadurch gekennzeichnet, dass**
mindestens ein Element der Gruppe, die aus Hausnetz, Ladestrecke (2, 7) und Datennetz des Kraftfahrzeugs besteht, eine optische Übertragungsstrecke aufweist, und
das erste und das zweite Übertragungsverfahren ein auf OFDM, Orthogonal Frequency Division Multiplexing, und DMT, Discrete Multitone, oder deren Modifikationen basierendes Übertragungsverfahren durch einen der folgenden Standards definiert ist: IEEE P1901, HP, HomePlug Alliance, AV, HP AV2, HP Green PHY, ITU, G.hn, ITU, G.9960, ITU, G.hnem, ITU, G.9954, ITU, HPNPA.

2. Lade- und Kommunikationssystem nach Anspruch 1, **dadurch gekennzeichnet, dass** die optische Übertragungsstrecke als Glasfaser oder Polymer-Optische-Faser (POF) ausgebildet ist.

3. Lade- und Kommunikationssystem nach Anspruch 1, **dadurch gekennzeichnet, dass** der Übertragungskanal zur Datenkommunikation als optische Übertragungsstrecke kabellos mittels Free Space Optics, FSO, oder OWC, Optical Wireless Communications oder Datenübertragung mittels sichtbarem Licht, Visible Light Communication, VLC, ausgebildet ist.

4. Lade- und Kommunikationssystem nach einem der vorhergehenden Ansprüche, **dadurch gekennzeichnet, dass** das erste Schnittstellenelement einen optischen Transceiver (6) aufweist, der zur Umwandlung von elektrischen Signalen in optische Signale geeignet ist.

5. Lade- und Kommunikationssystem nach einem der vorhergehenden Ansprüche, **dadurch gekennzeichnet, dass** das erste Schnittstellenelement einen optischen Transceiver (9) aufweist, der zur Umwandlung von optischen Signalen in elektrische Signale geeignet ist.

6. Lade- und Kommunikationssystem nach einem der vorhergehenden Ansprüche, **dadurch gekennzeichnet, dass** das zweite Schnittstellenelement einen optischen Transceiver (4) aufweist, der zur Umwandlung von elektrischen Signalen in optische Signale geeignet ist.

7. Lade- und Kommunikationssystem nach einem der vorhergehenden Ansprüche, **dadurch gekennzeichnet, dass** das erste oder zweite Schnittstellenelement einen optischen Umsetzer (8, 10) aufweist, der zur Umwandlung von optischen Signalen geeignet ist.

8. Lade- und Kommunikationssystem nach einem der vorhergehenden Ansprüche, **dadurch gekennzeichnet, dass** das zweite Schnittstellenelement einen optischen Transceiver (6) aufweist, der zur Umwandlung von optischen Signalen in elektrische Signale geeignet ist.

## Claims

1. Charging and communications system for a motor vehicle (KFZ) with a charging station which is attached to a house net and which is connected by a first interface element (1, 6, 9, 10) to one end of a charging section (2, 7) wherein the house net uses a first transmission method for data communication,
and a second interface element (3, 4, 6, 8) between the other end of the loading section (2, 7) and a data network of the motor vehicle (KFZ)" wherein the data network of the motor vehicle (KFZ) uses a second transmission method for data communication,
wherein the charging section comprises a charging cable with an electric lead (2) for charging an energy store of the motor vehicle,
wherein at least one transmission channel is designed for data communication in both directions via the first interface element (1, 6, 9, 10), the charging section (2, 7) and the second interface element (3, 4, 6, 8), wherein the first transmission method is identical with the second transmission method,
**characterised in that**
at least one element of the group which is made up of the house net, the charging section (2, 7) and the data network of the motor vehicle has an optical transmission section, and
the first and the second transmission method is a transmission method based on OFDM, orthogonal frequency division multiplexing, and DMT, discrete multitone, or modifications thereof, defined by one of the following standards: IEEE P1901, HP, home plug alliance, AV, HP AV2, HP green PHY, ITU (G.hn), G9960, G.hnem, G.9954, HPNA, ITU.

2. Charging and communications system according to claim 1 **characterised in that** the optical transmission section is formed as a glass fibre or polymer optic fibre (POF).

3. Charging and communications system according to claim 1 **characterised in that** the transmission channel for data communication is formed as optical transmission section cable-less by means of free space optics, FSO, or OWC, optical wireless communications, or data transmission by means of visible light, visible light communication, VLC.

4. Charging and communications system according to one of the preceding claims **characterised in that** the first interface element has an optical transceiver (6) which is suitable for converting electrical signals into optical signals.

5. Charging and communications system according to one of the preceding claims **characterised in that** the first interface element has an optical transceiver (9) which is suitable for converting optical signals into electrical signals.

6. Charging and communications system according to one of the preceding claims **characterised in that** the second interface element has an optical transceiver (4) which is suitable for converting electrical signals into optical signals.

7. Charging and communications system according to one of the preceding claims **characterised in that** the first or second interface element has an optical converter (8, 10) which is suitable for converting optical signals.

8. Charging and communications system according to one of the preceding claims **characterised in that** the second interface element has an optical transceiver (6) which is suitable for converting optical signals into electrical signals.

## Revendications

1. Système de chargement et de communication pour un véhicule automobile (KFZ) comprenant
un poste de chargement raccordé à un réseau domestique, qui est relié par l'intermédiaire d'un premier élément d'interface (1, 6, 9, 10) à une extrémité d'un circuit de chargement (2, 7), le réseau domestique utilisant un premier procédé de transmission pour la communication de données,
et un second élément d'interface (3, 4, 6, 8) entre l'autre extrémité du circuit de chargement (2, 7) et un réseau de données du véhicule automobile (KFZ), le réseau de données du véhicule automobile (KFZ) utilisant un second procédé de transmission pour la communication de données,
le circuit de chargement comprenant un câble de chargement avec une ligne électrique (2) pour le chargement d'un accumulateur d'énergie du véhicule automobile,
au moins un canal de transmission pour la communication de données dans les deux directions étant réalisé par l'intermédiaire du premier élément d'interface (1, 6, 9, 10), du circuit de chargement (2, 7) et du second élément d'interface (3, 4, 6, 8), le premier procédé de transmission étant identique au second procédé de transmission,
**caractérisé en ce que**
au moins un élément du groupe constitué du réseau domestique, du circuit de chargement (2, 7) et du réseau de données du véhicule automobile présente un circuit de transmission optique, et
le premier et le second procédé de transmission est un procédé basé sur OFDM, Orthogonal Frequency Division Multiplexing, et DMT, Discrete Multitone, ou des modifications de ces derniers, défini par l'un des standards suivants : IEEE P 1901, HP HomePlug Alliance, AV, HP AV2, HP Green PHY, ITU G.hn, ITU G.9960, ITU G.hnem, ITU G.9954, ITU HPNA.

2. Système de chargement et de communication selon la revendication 1, **caractérisé en ce que** le circuit de transmission optique est réalisé sous forme de fibres de verre ou de fibres optiques polymères (FOP).

3. Système de chargement et de communication selon la revendication 1, **caractérisé en ce que** le canal de transmission pour la communication de données est réalisé sous forme de circuit de transmission optique sans fil par Free Space Optics, FSO, ou OWC, Optical Wireless Comunications, ou transmission de données par lumière visible, Visible Light Communication, VLC.

4. Système de chargement et de communication selon l'une des revendications précédentes, **caractérisé en ce que** le premier élément d'interface présente un émetteur-récepteur optique (6) qui est adapté à la conversion de signaux électriques en signaux optiques.

5. Système de chargement et de communication selon l'une des revendications précédentes, **caractérisé en ce que** le premier élément d'interface présente un émetteur-récepteur optique (9) qui est adapté à la conversion de signaux optiques en signaux électriques.

6. Système de chargement et de communication selon l'une des revendications précédentes, **caractérisé en ce que** le second élément d'interface présente un émetteur-récepteur optique (4) qui est adapté à la conversion de signaux électriques en signaux optiques.

7. Système de chargement et de communication selon l'une des revendications précédentes, **caractérisé en ce que** le premier ou le second élément d'interface présente un convertisseur optique (8, 10) qui est adapté à la conversion de signaux optiques.

8. Système de chargement et de communication selon l'une des revendications précédentes, **caractérisé en ce que** le second élément d'interface présente un émetteur-récepteur optique (6) qui est adapté à la conversion de signaux optiques en signaux électriques.
